(19) Europäisches Patentamt
European Patent Office
Office européen des brevets

(11) **EP 2 888 292 B1**

(12) **EUROPEAN PATENT SPECIFICATION**

(45) Date of publication and mention of the grant of the patent:
**10.04.2019 Bulletin 2019/15**

(21) Application number: **13753061.4**

(22) Date of filing: **15.08.2013**

(51) Int Cl.:
***C08B 11/20*** *(2006.01)* ***C08B 13/00*** *(2006.01)*

(86) International application number:
**PCT/US2013/055188**

(87) International publication number:
**WO 2014/031448 (27.02.2014 Gazette 2014/09)**

(54) **PROCESS FOR PREPARING AN ESTER OF A CELLULOSE ETHER IN THE PRESENCE OF AN ALKALI METAL CARBOXYLATE**

VERFAHREN ZUR HERSTELLUNG EINES ESTERS EINES CELLULOSEETHERS IN GEGENWART EINES ALKALIMETALLCARBOXYLATS

PROCÉDÉ POUR LA PRÉPARATION D'UN ESTER D'UN ÉTHER DE CELLULOSE EN PRÉSENCE D'UN CARBOXYLATE DE MÉTAL ALCALIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2012 US 201261692939 P**

(43) Date of publication of application:
**01.07.2015 Bulletin 2015/27**

(73) Proprietor: **Dow Global Technologies LLC**
**Midland, MI 48674 (US)**

(72) Inventors:
- **PETERMANN, Oliver**
  **25462 Rellingen (DE)**
- **SPREHE, Matthias**
  **29664 Walsrode (DE)**

(74) Representative: **f & e patent**
**Fleischer, Engels & Partner mbB, Patentanwälte**
**Braunsberger Feld 29**
**51429 Bergisch Gladbach (DE)**

(56) References cited:
**EP-A2- 0 041 665** **GB-A- 722 594**
**US-A- 2 852 508**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD

The present invention relates to an improved process for preparing an ester of a cellulose ether.

INTRODUCTION

Esters of cellulose ethers, their uses and processes for preparing them are generally known in the art. One method of producing cellulose ether-esters is described in U.S. Patent No. 3,435,027. Various known esters of cellulose ethers are useful as enteric polymers for pharmaceutical dosage forms, such as methylcellulose phthalate, hydroxypropyl methylcellulose phthalate, methylcellulose succinate, or hydroxypropyl methylcellulose succinate. Enteric polymers are those that are resistant to dissolution in the acidic environment of the stomach. Dosage forms coated with such polymers protect the drug from inactivation or degradation in the acidic environment or prevent irritation of the stomach by the drug. US Patent No. 4,365,060 discloses enterosoluble capsules which are said to have excellent enterosolubility behavior.

U.S. Patent No. 4,226,981 discloses a process for preparing mixed esters of cellulose ethers, such as hydroxypropyl methyl cellulose acetate succinate (HPMCAS), by esterifying hydroxypropyl methylcellulose with succinic anhydride and acetic anhydride in the presence of an alkali carboxylate as the esterification catalyst and acetic acid as the reaction medium. The cellulose ether as the base material is introduced into the reaction vessel together with about 100 to 2,000 parts by weight of the carboxylic acid as the reaction medium and about 20 to 200 parts by weight of the alkali carboxylate as the catalyst, all being expressed per 100 parts by weight of the cellulose ether, followed by further introduction of predetermined amounts of succinic anhydride and an anhydride of an aliphatic monocarboxylic acid, the resulting mixture being heated at 60 to 110 °C for a period of 2 - 25 hours. In the working examples 250 g of acetic acid and 50 g of sodium acetate are utilized per 50 g of hydroxypropyl methyl cellulose. 15 - 60 g of succinic anhydride and 25 - 80 g of acetic anhydride are added and the reaction mixture is heated at 85 °C with agitation for 3 hours.

European Patent Application EP 0 219 426 discloses a process for producing hydroxypropyl methyl cellulose phthalate (HPMCP) or hydroxypropyl methyl cellulose acetate succinate (HPMCAS) wherein 100 parts by weight of hydroxypropyl methyl cellulose (HPMC), 80 parts by weight of sodium acetate and 300 parts by weight of acetic acid are either reacted with 120 parts by weight of phthalic anhydride or a combination of 25 parts by weight of succinic anhydride and 38 parts by weight of acetic anhydride.

A large number of presently known drugs have a low solubility in water, so that complex techniques are required to prepare a dosage form. One known method includes dissolving such drug together with a pharmaceutically acceptable water-soluble polymer in an organic solvent that is optionally blended with water, and to spray-dry the solution. The pharmaceutically acceptable water-soluble polymer is aimed at reducing the crystallinity of the drug, thereby minimizing the activation energy necessary for the dissolution of the drug, as well as establishing hydrophilic conditions around the drug molecules, thereby improving the solubility of the drug itself to increase its bioavailability, i.e., its *in vivo* absorption by an individual upon ingestion.

International Patent Application WO 2005/115330 discloses hydroxypropyl methyl cellulose acetate (HPMCA) polymers and hydroxypropyl methyl cellulose acetate succinate (HPMCAS) polymers with a specific combination of substitution levels. The HPMCA polymer has a degree of substitution of acetyl groups ($DOS_{Ac}$) of at least 0.15. The HPMCAS polymer has a degree of substitution of succinoyl groups (DOSs) of at least 0.02, a $DOS_{Ac}$ of at least 0.65 and a sum of $DOS_{Ac}$ and $DOS_s$ of at least 0.85. WO 2005/115330 discloses that these HPMCAS and HPMCA polymers are useful for forming solid amorphous dispersions of hydrophobic drugs and suggests that when these HPMCAS and HPMCA polymers are used in combination with drugs that are prone to rapid crystallization from supersaturated aqueous solutions, the HPMCAS and HPMCA polymers are particularly effective at sustaining high drug concentrations and thereby enhancing absorption of drug *in vivo.* WO 2005/115330 discloses that the increased acetate substitution allows increased solubility of active agents in spray-dried solutions, while the increased succinate substitution increases the solubility of the polymer in aqueous solution.

International Patent Application WO 2011/159626 discloses an active ingredient and HPMCAS having a degree of substitution of methoxy groups ($DS_M$) of ≤ 1.45, and a combined degree of substitution of acetyl groups ($DS_{Ac}$) and succinoyl groups ($DS_s$) of ($DS_{Ac} + DS_s$) ≥ 1.25.

However, in view of the large diversity of drugs, it is self-evident that a limited variety of esterified cellulose ethers having a high degree of substitution of acetyl groups and succinoyl groups cannot fulfill all needs. Edgar et al., Cellulose (2007), 14:49-64 "Cellulose esters in drug delivery" state in the conclusion of their survey article: "The fundamental properties of cellulose esters are well-suited to improving drug delivery.... Much progress has been made in recent years in the application of well-studied cellulose esters to improve drug delivery systems. There is room for much more advancement, particularly by the in-depth study of structure property relationships as they pertain to pharmaceutical

applications. Full success in this endeavor will require considerable vision, since the current path to market for novel pharmaceutical excipients is difficult, long, fraught with uncertainty, and expensive."

Accordingly, it is one object of the present invention to find other ways of modifying esterified cellulose ethers than by increasing their degree of substitution of ester groups.

## SUMMARY

Surprisingly, it has been found that the weight average molecular weight of an ester of a cellulose ether can be varied by varying certain process parameters in the process for esterifying a cellulose ether, even when the cellulose ether used as a starting material and the amount of esterifying agent are kept the same.

Applicants believe that controlling the weight average molecular weight of an esterified cellulose ether is an important factor for influencing drug release rate from solid dispersions of a drug in an esterified cellulose ether. Edgar et al., Cellulose (2007), 14:49-64 mention a study on microparticle formation of theophylline with two CABs (cellulose acetate butyrates) of similar composition, differing substantially only in molecular weight. The release of theophylline was slowed dramatically by higher polymer molecular weight, speeded dramatically by lower particle size, and reduced substantially by particle formation from a higher viscosity solution.

Specifically, it has been found that the weight average molecular weight of an ester of a cellulose ether can be varied by varying the molar ratio [alkali metal carboxylate / anhydroglucose units of cellulose ether] in the process for producing the esterified cellulose ether. Surprisingly, it has also been found that a certain molar ratio [alkali metal carboxylate / anhydroglucose units of cellulose ether] provides an ester of a cellulose ether of a particularly high weight average molecular weight.

The invention is defined by the appendant claims. The description that follows is subject to this limitation. All aspects and embodiments which are not covered by the claims are merely aspects of the present disclosure and do not form part of the invention.

Accordingly, one aspect of the present invention is a process for preparing two or more esters of a cellulose ether, each having the same ether and ester substituents but different weight average molecular weights, which comprises the steps of

esterifying a cellulose ether with (i) an aliphatic monocarboxylic acid anhydride or (ii) a dicarboxylic acid anhydride or (iii) a combination of an aliphatic monocarboxylic acid anhydride and a dicarboxylic acid anhydride in the presence of an alkali metal carboxylate in two or more separate reactions, wherein

in each reaction a different molar ratio [alkali metal carboxylate / anhydroglucose units of cellulose ether] is used to produce esters of the cellulose ether of different weight average molecular weights.

It has also been found that a certain molar ratio [alkali metal carboxylate / anhydroglucose units of cellulose ether] provides an esterified cellulose ether of a particularly high weight average molecular weight.

Accordingly, another aspect of the present invention is a process for preparing an esterified cellulose ether wherein a cellulose ether is esterified with (i) an aliphatic monocarboxylic acid anhydride or (ii) a dicarboxylic acid anhydride or (iii) a combination of an aliphatic monocarboxylic acid anhydride and a dicarboxylic acid anhydride in the presence of an alkali metal carboxylate and the molar ratio [alkali metal carboxylate / anhydroglucose units of cellulose ether] is from [2.7 / 1.0] to [4.5 / 1.0].

## DESCRIPTION OF EMBODIMENTS

The cellulose ether used as a starting material in the process of the present invention has a cellulose backbone having β-1,4 glycosidically bound D-glucopyranose repeating units, designated as anhydroglucose units in the context of this invention, which are represented for unsubstituted cellulose by the formula

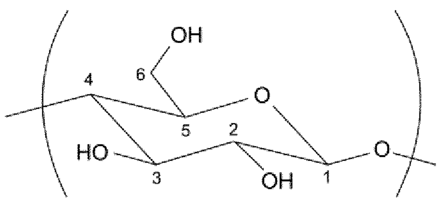

(1)

illustrating the numbering of the carbon atoms in the anhydroglucose units. The numbering of the carbon atoms in the anhydroglucose units is referred to in order to designate the position of substituents covalently bound to the respective carbon atom. The cellulose ether used as a starting material in the process of the present invention preferably is an alkyl cellulose, hydroxyalkyl cellulose or hydroxyalkyl alkylcellulose. This means that in the cellulose ether utilized in the

process of the present invention, at least a part of the hydroxyl groups of the cellulose backbone at the 2-, 3- and 6-positions of the anhydroglucose units are substituted by alkoxyl groups or hydroxyalkoxyl groups or a combination of alkoxyl and hydroxyalkoxyl groups. The hydroxyalkoxyl groups are typically hydroxymethoxyl, hydroxyethoxyl and/or hydroxypropoxyl groups. Hydroxyethoxyl and/or hydroxypropoxyl groups are preferred. Typically one or two kinds of hydroxyalkoxyl groups are present in the cellulose ether. Preferably a single kind of hydroxyalkoxyl group, more preferably hydroxypropoxyl, is present. The alkoxyl groups are typically methoxyl, ethoxyl and/or propoxyl groups. Methoxyl groups are preferred.

Illustrative of the above-defined cellulose ethers are alkylcelluloses, such as methylcellulose, ethylcellulose, and propylcellulose; hydroxyalkylcelluloses, such as hydroxyethylcellulose, hydroxypropylcellulose, and hydroxybutylcellulose; and hydroxyalkyl alkylcelluloses, such as hydroxyethyl methylcellulose, hydroxymethyl ethylcellulose, ethyl hydroxyethylcellulose, hydroxypropyl methylcellulose, hydroxypropyl ethylcellulose, hydroxybutyl methylcellulose, and hydroxybutyl ethylcellulose; and those having two or more hydroxyalkyl groups, such as hydroxyethylhydroxypropyl methylcellulose. Most preferably, the cellulose ether is a hydroxypropyl methylcellulose.

The degree of the substitution of hydroxyl groups at the 2-, 3- and 6-positions of the anhydroglucose units by hydroxyalkoxyl groups is expressed by the molar substitution of hydroxyalkoxyl groups, the MS(hydroxyalkoxyl). The MS(hydroxyalkoxyl) is the average number of moles of hydroxyalkoxyl groups per anhydroglucose unit in the cellulose ether. It is to be understood that during the hydroxyalkylation reaction the hydroxyl group of a hydroxyalkoxyl group bound to the cellulose backbone can be further etherified by an alkylation agent, e.g. a methylation agent, and/or a hydroxyalkylation agent. Multiple subsequent hydroxyalkylation etherification reactions with respect to the same carbon atom position of an anhydroglucose unit yields a side chain, wherein multiple hydroxyalkoxyl groups are covalently bound to each other by ether bonds, each side chain as a whole forming a hydroxyalkoxyl substituent to the cellulose backbone.

The term "hydroxyalkoxyl groups" thus has to be interpreted in the context of the MS(hydroxyalkoxyl) as referring to the hydroxyalkoxyl groups as the constituting units of hydroxyalkoxyl substituents, which either comprise a single hydroxyalkoxyl group or a side chain as outlined above, wherein two or more hydroxyalkoxy units are covalently bound to each other by ether bonding. Within this definition it is not important whether the terminal hydroxyl group of a hydroxyalkoxyl substituent is further alkylated, e.g. methylated, or not; both alkylated and non-alkylated hydroxyalkoxyl substituents are included for the determination of MS(hydroxyalkoxyl). The cellulose ether utilized in the process of the invention generally has a molar substitution of hydroxyalkoxyl groups in the range 0.05 to 1.00, preferably 0.08 to 0.90, more preferably 0.12 to 0.70, most preferably 0.15 to 0.60, and particularly 0.20 to 0.50.

The average number of hydroxyl groups substituted by alkoxyl groups, such as methoxyl groups, per anhydroglucose unit, is designated as the degree of substitution of alkoxyl groups, DS(alkoxyl). In the above-given definition of D S, the term "hydroxyl groups substituted by alkoxyl groups" is to be construed within the present invention to include not only alkylated hydroxyl groups directly bound to the carbon atoms of the cellulose backbone, but also alkylated hydroxyl groups of hydroxyalkoxyl substituents bound to the cellulose backbone. The cellulose ethers used as a starting material in the process of the present invention preferably have a DS(alkoxyl) in the range of 1.0 to 2.5, more preferably from 1.1 to 2.4 , most preferably from 1.2 to 2.2 and particularly from 1.6 to 2.05.

The degree of substitution of alkoxyl groups and the molar substitution of hydroxyalkoxyl groups can be determined by Zeisel cleavage of the cellulose ether with hydrogen iodide and subsequent quantitative gas chromatographic analysis (G. Bartelmus and R. Ketterer, Z. Anal. Chem., 286 (1977) 161-190). Most preferably the cellulose ether utilized in the process of the invention is hydroxypropyl methylcellulose having a DS(methoxyl) within the ranges indicated above for DS(alkoxyl) and an MS(hydroxypropoxyl) within the ranges indicated above for MS(hydroxyalkoxyl).

The cellulose ether used as a starting material in the process of the present invention preferably has a viscosity of from 2.4 to 200 mPa·s, preferably from 2.4 to 100 mPa·s, more preferably from 2.5 to 50 mPa·s, in particular from 3 to 30 mPa·s, measured as a 2 weight-% aqueous solution at 20 °C according to ASTM D2363 - 79 (Reapproved 2006). Cellulose ethers of such viscosity can be obtained by subjecting a cellulose ether of higher viscosity to a partial depolymerization process. Partial depolymerization processes are well known in the art and described, for example, in European Patent Applications EP 1,141,029; EP 210,917; EP 1,423,433; and US Patent No. 4,316,982. Alternatively, partial depolymerization can be achieved during the production of the cellulose ethers, for example by the presence of oxygen or an oxidizing agent.

The cellulose ether is reacted with (i) an aliphatic monocarboxylic acid anhydride or (ii) a dicarboxylic acid anhydride or (iii) a combination of an aliphatic monocarboxylic acid anhydride and a dicarboxylic acid anhydride. Preferred aliphatic monocarboxylic acid anhydrides are selected from the group consisting of acetic anhydride, butyric anhydride and propionic anhydride. Preferred dicarboxylic acid anhydrides are selected from the group consisting of succinic anhydride, maleic anhydride and phthalic anhydride. A preferred aliphatic monocarboxylic acid anhydride can be used alone; or a preferred dicarboxylic acid anhydride can be used alone; or a preferred aliphatic monocarboxylic acid anhydride can be used in combination with a preferred dicarboxylic acid anhydride.

If an aliphatic monocarboxylic acid anhydride and a dicarboxylic acid anhydride are used for esterifying the

cellulose ether, the two anhydrides may be introduced into the reaction vessel at the same time or separately one after the other. The amount of each anhydride to be introduced into the reaction vessel is determined depending on the desired degree of esterification to be obtained in the final product, usually being 1 to 10 times the stoichiometric amounts of the desired molar degree of substitution of the anhydroglucose units by esterification. The molar ratio between the anhydride of an aliphatic monocarboxylic acid and the anhydroglucose units of the cellulose ether generally is 0.1 / 1 or more, preferably 0.3 / 1 or more, more preferably 0. 5 / 1 or more, most preferably 1 / 1 or more, and particularly 1.5 / 1 or more. The molar ratio between the anhydride of an aliphatic monocarboxylic acid and the anhydroglucose units of the cellulose ether preferably is 17 / 1 or less, more preferably 10 / 1 or less, and most preferably 6 / 1 or less.

The molar ratio between the anhydride of a dicarboxylic acid and the anhydroglucose units of cellulose ether preferably is 0.01 / 1 or more, more preferably 0.04 / 1 or more, and most preferably 0.2 / 1 or more. The molar ratio between the anhydride of a dicarboxylic acid and the anhydroglucose units of cellulose ether preferably is 2.5 / 1 or less, more preferably 1.5 / 1 or less, and most preferably 1 / 1 or less.

The molar number of anhydroglucose units of the cellulose ether utilized in the process of the present invention can be determined from the weight of the cellulose ether used as a starting material, by calculating the average molecular weight of the substituted anhydroglucose units from the DS(alkoxyl) and MS(hydroxyalkoxyl).

The esterification reaction is conducted in the presence of an alkali metal carboxylate, such as sodium acetate or potassium acetate, as an esterification catalyst. Surprisingly, it has been found that there is no need to utilize cellulose ethers of different weight average molecular weights, e.g. cellulose ethers having a different number of anhydroglucose units or a different degree of ether substituents, or to utilize different amounts of an aliphatic monocarboxylic acid anhydride or different amounts of a dicarboxylic acid anhydride to produce esters of the cellulose ether of different weight average molecular weights. The present invention allows an adjustment of the weight average molecular weight of the produced esters of the cellulose ether (i.e., esterified cellulose ethers) by adjusting the molar ratio [alkali metal carboxylate / anhydroglucose units of cellulose ether].

In one embodiment of the present invention two or more esters of a cellulose ether are prepared, each having the same ether and ester substituents but different weight average molecular weights. In this embodiment a cellulose ether is esterified with an aliphatic monocarboxylic acid anhydride and/or a dicarboxylic acid anhydride in the presence of an alkali metal carboxylate in two or more separate reactions, wherein in each reaction a different molar ratio [alkali metal carboxylate / anhydroglucose units of cellulose ether] is used to produce esters of the cellulose ether of different weight average molecular weights. In each reaction the molar ratio [alkali metal carboxylate / anhydroglucose units of cellulose ether] is generally [0.1 / 1.0] different, preferably at least [0.3 / 1.0] different, more preferably at least [0.8 / 1.0], and most preferably at least [1.5 / 1.0] from the molar ratio in the one or more other reactions. Typically the molar ratio in each reaction is up to [8 / 1] different, more typically up to [4 / 1] different, and most typically up to [2 / 1] different from the molar ratio in the one or more other reactions. The preferred ranges for the molar ratio [alkali metal carboxylate / anhydroglucose units of cellulose ether] in each of the reactions are from [0.2 / 1.0] to [50.0 / 1.0], or from [0.3 / 1.0] to [10.0 / 1.0], or from [0.5 / 1.0] to [7.0 / 1.0], or from [1.5 / 1.0] to [5.0/ 1.0], or from [2.7 / 1.0] to [4.5 / 1.0], or from [3.0 / 1.0] to [4.0 / 1.0].

In the embodiment of the invention where two or more esters of a cellulose ether are prepared, each having the same ether and ester substituents but different weight average molecular weights, by esterification of a cellulose ether in the presence of an alkali metal carboxylate in two or more separate reactions, preferably in each reaction a cellulose ether having about the same weight average molecular weight (expressed as its viscosity as a 2 weight percent aqueous solution), the same type of ether substituents, and about the same amount of ether substituents, e.g., expressed as DS(alkoxyl) and/or MS(hydroxyalkoxyl), is used as a starting material. Preferably in each reaction the cellulose ether is reacted with (i) the same aliphatic monocarboxylic acid anhydride or (ii) the same dicarboxylic acid anhydride or (iii) the same combination of aliphatic monocarboxylic acid anhydride and dicarboxylic acid anhydride in about the same molar ratio between the said one or more anhydrides and the cellulose ether.

Another aspect of the present invention is a process for preparing an ester of a cellulose ether wherein a cellulose ether is esterified with an aliphatic monocarboxylic acid anhydride and/or a dicarboxylic acid anhydride in the presence of an alkali metal carboxylate and the molar ratio [alkali metal carboxylate / anhydroglucose units of cellulose ether] is from [2.7 / 1.0] to [4.5 / 1.0], preferably from [2.8 / 1.0] to [4.0 / 1.0], more preferably from [3.0 / 1.0] to [4.0 / 1.0], and most preferably from [3.1 / 1.0] to [3.7 / 1.0].

According to another aspect of the process for preparing an esterified cellulose ether according to the present invention a cellulose ether as described above is esterified with (i) an aliphatic monocarboxylic acid anhydride or (ii) a dicarboxylic acid anhydride or (iii) a combination of an aliphatic monocarboxylic acid anhydride and a dicarboxylic acid anhydride as described above in the presence of an alkali metal carboxylate wherein the weight average molecular weight $M_w$ of the esterified cellulose ether is varied by varying the molar ratio [alkali metal carboxylate / anhydroglucose units of cellulose ether]. Preferred molar ratios are as described above. The weight average molecular weight $M_w$ of the esterified cellulose ether is preferably varied while keeping the reactants cellulose ether, aliphatic monocarboxylic acid anhydride and dicarboxylic acid anhydride and the weight ratios between these reactants substantially constant.

The esterification of the cellulose ether is typically conducted in an aliphatic carboxylic acid as a reaction diluent, such as acetic acid, propionic acid, or butyric acid. The reaction diluent can comprise minor amounts of other solvents or diluents which are liquid at room temperature and do not react with the cellulose ether, such as aromatic or aliphatic solvents like benzene, toluene, 1,4-dioxane, or tetrahydrofurane; or halogenated $C_1$-$C_3$ derivatives, like dichloro methane or dichloro methyl ether, but the amount of the aliphatic carboxylic acid should generally be more than 50 percent, preferably at least 75 percent, and more preferably at least 90 percent, based on the total weight of the reaction diluent. Most preferably the reaction diluent consists of an aliphatic carboxylic acid. The esterification reaction is generally conducted in the presence of 100 to 2,000 parts by weight of an aliphatic carboxylic acid as the reaction diluent per 100 parts by weight of the cellulose ether. The molar ratio [aliphatic carboxylic acid / anhydroglucose units of cellulose ether] generally is from [2 / 1] to [70 / 1]. Preferred ranges for the molar ratio [aliphatic carboxylic acid / anhydroglucose units of cellulose ether] are from [3 / 1] to [60 / 1] or from [3.5 / 1] to [20 / 1] or from [3.8 / 1] to [15 / 1] or from [4 / 1] to [12 / 1].

The reaction mixture is generally heated at 60 °C to 110 °C, preferably at 70 to 100 °C, for a period of time sufficient to complete the reaction, that is, typically from 2 to 25 hours, more typically from 2 to 8 hours. The cellulose ether as the starting material is not always soluble in the reaction diluent, such as an aliphatic carboxylic acid, but can only be dispersed in or swollen by the reaction diluent, especially when the degree of substitution in the cellulose ether is relatively small. The esterification reaction can take place even with such a dispersed or swollen cellulose ether and, as the esterification reaction proceeds, the cellulose ether under reaction generally dissolves in the reaction diluent, to finally give a homogeneous reaction mixture.

After completion of the esterification reaction, the reaction product can be precipitated from the reaction mixture in a known manner, for example by contacting with a large volume of water, such as described in U.S. Patent No. 4,226,981, International Patent Application WO 2005/115330 or European Patent Application EP 0 219 426. However, in a preferred embodiment of the invention the reaction product mixture is contacted with an amount of from 5 to 400, preferably from 8 to 300, more preferably from 10 to 100, and most preferably from 12 to 50 weight parts of water per weight part of cellulose ether used for esterification. The weight ratio [water / reaction product mixture excluding water] is generally from 1/1 to 10 /1, preferably from 1.4/ to 5 /1, more preferably from 2/1 to 3/1. In a preferred embodiment of the invention the combination of water and the reaction product mixture is subjected to a shear rate of at least 800 $s^{-1}$, preferably at least 1500 $s^{-1}$, more preferably at least 3000 $s^{-1}$, and most preferably at least 8000 $s^{-1}$. The shear rate is generally up to 600,000 $s^{-1}$, and typically up to 500,000 $s^{-1}$. Applying such shear rates in the process of the present invention is useful for providing esters of cellulose ethers which are non-tacky and of fine particle size upon precipitation and separation from the reaction product mixture. According to known precipitation processes such non-tacky and fine particles are not achieved. This shear rate can be obtained in a high shear device, such as a high shear mixer, also known as rotor-stator mixer or homogenizer, high shear mill or high shear pump. A high shear device commonly comprises a rotor in combination with a stationary part of the shear device, also referred to as "stationary", such as a stator or housing. The stationary creates a close-clearance gap between the rotor and itself and forms a high-shear zone for materials in this gap. The stationary can include single or multiple rows of openings, gaps or teeth to induce a kind of shear frequency and increased turbulent energy. One metric for the degree or thoroughness of mixing is the shearing force generated by a mixing device with a high tip speed. Fluid undergoes shear when one area of fluid travels with a different velocity relative to an adjacent area. The tip speed of the rotor is a measure of the kinetic energy generated by the rotation according to the formula: Tip speed = rotation rate of rotor x rotor circumference. The shear rate is based on the inverse relationship between the gap distance between the rotor and the stationary part of the shear device which is commonly referred to as the stator or housing. In the case the high shear device is not equipped with a stator, the inner wall of a precipitation vessel serves as a stator. The formula applies: Shear rate = Tip speed / gap distance between outer diameter of rotor and stationary. The high shear device generally runs at a tip speed of at least 4 m/s, preferably at least 8 m/s, more preferably at least 15 m/s, and most preferably at least 30 m/s. The tip speed is generally up to 320 m/s, typically up to 280 m/s.

The dispersed ester of the cellulose ether can subsequently be separated from the remainder of the mixture in a known manner, such as by centrifugation or filtration or upon settling by decantation. The recovered ester of the cellulose ether can be washed with water to remove impurities and dried to produce a esterified cellulose ether in the form of a powder.

According to the process of the present invention an esterified cellulose ether is produced that has (i) aliphatic monovalent acyl groups or (ii) groups of the formula -C(O) - R - COOA wherein R is a divalent aliphatic or aromatic hydrocarbon group or (iii) a combination of aliphatic monovalent acyl groups and groups of the formula -C(O) - R - COOA wherein R is a divalent aliphatic or aromatic hydrocarbon group and A is hydrogen or a cation. The cation preferably is an ammonium cation, such as $NH_4^+$ or an alkali metal ion, such as the sodium or potassium ion, more preferably the sodium ion. Most preferably, A is hydrogen.

The aliphatic monovalent acyl groups are preferably selected from the group consisting of acetyl, propionyl, and butyryl, such as n-butyryl or i-butyryl.

Preferred groups of the formula -C(O)-R-COOA are

$-C(O)-CH_2-CH_2-COOA$, such as $-C(O)-CH_2-CH_2-COOH$ or $-C(O)-CH_2-CH_2-COO^-Na^+$,
$-C(O)-CH=CH-COOA$, such as $-C(O)-CH=CH-COOH$ or $-C(O)-CH=CH-COO^-Na^+$, or
$-C(O)-C_6H_4-COOA$, such as $-C(O)-C_6H_4-COOH$ or $-C(O)-C_6H_4-COO^-Na^+$.

In the groups of formula $-C(O)-C_6H_4-COOA$ the carbonyl group and the carboxylic group are preferably arranged in ortho-positions.

Preferred esterified cellulose ethers are

i) HPMCXY and HPMCX, wherein HPMC is hydroxypropyl methyl cellulose, X is A (acetate), or X is B (butyrate) or X is Pr (propionate) and Y is S (succinate), or Y is P (phthalate) or Y is M (maleate), such as hydroxypropyl methyl cellulose acetate phthalate (HPMCAP), hydroxypropyl methyl cellulose acetate maleate (HPMCAM), hydroxypropyl methylcellulose acetate succinate (HPMCAS) or hydroxypropyl methyl cellulose acetate (HPMCA); or
ii) hydroxypropyl methyl cellulose phthalate (HPMCP); hydroxypropyl cellulose acetate succinate (HPCAS), hydroxybutyl methyl cellulose propionate succinate (HBMCPrS), hydroxyethyl hydroxypropyl cellulose propionate succinate (HEHPCPrS); and methyl cellulose acetate succinate (MCAS).

Hydroxypropyl methylcellulose acetate succinate (HPMCAS) is the most preferred esterified cellulose ether.

The esterified cellulose ethers have a DS(methoxyl) and an MS(hydroxyalkoxyl) as indicated further above.

The esterified cellulose ethers generally have a degree of substitution of aliphatic monovalent acyl groups, such as acetyl, propionyl, or butyryl groups, of 0 to 1.75, preferably of 0.05 to 1.50, more preferably of 0.10 to 1.25, and most preferably of 0.20 to 1.00.

The esterified cellulose ethers generally have a degree of substitution of groups of formula -C(O)-R-COOA, such as succinoyl, of 0 to 1.6, preferably of 0.05 to 1.30, more preferably of 0.05 to 1.00, and most preferably of 0.10 to 0.70 or even 0.10 to 0.60.

The sum of i) the degree of substitution of aliphatic monovalent acyl groups and ii) the degree of substitution of groups of formula -C(O)-R-COOA is greater than 0. It is generally from 0.05 to 2.0, preferably from 0.10 to 1.4, more preferably from 0.20 to 1.15, most preferably from 0.30 to 1.10 and particularly from 0.40 to 1.00.

The content of the acetate and succinate ester groups is determined according to "Hypromellose Acetate Succinate, United States Pharmacopia and National Formulary, NF 29, pp. 1548-1550". Reported values are corrected for volatiles (determined as described in section "loss on drying" in the above HPMCAS monograph).The method may be used in analogue manner to determine the content of propionyl, butyryl, phthalyl and other ester groups.

The content of ether groups in the esterified cellulose ether is determined in the same manner as described for "Hypromellose", United States Pharmacopeia and National Formulary, USP 35, pp 3467-3469.

The contents of ether and ester groups obtained by the above analyses are converted to DS and MS values of individual substituents according to the formulas below. The formulas may be used in analogue manner to determine the DS and MS of substituents of other cellulose ether esters.

$$\begin{aligned}\%\,cellulose\ backbone &= 100 - \left(\%MeO * \frac{M(OCH_3) - M(OH)}{M(OCH_3)}\right) \\ &- \left(\%HPO * \frac{M(OCH_2CH(OH)CH_3) - M(OH)}{M(OCH_2CH(OH)CH_3)}\right) \\ &- \left(\%Acetyl * \frac{M(COCH_3) - M(H)}{M(COCH_3)}\right) \\ &- \left(\%Succinoyl * \frac{M(COC_2H_4COOH) - M(H)}{M(COC_2H_4COOH)}\right)\end{aligned}$$

$$DS(Me) = \frac{\frac{\%MeO}{M(OCH_3)}}{\frac{\%cellulose\ backbone}{M(AGU)}} \qquad MS(HP) = \frac{\frac{\%HPO}{M(HPO)}}{\frac{\%cellulose\ backbone}{M(AGU)}}$$

$$DS(Acetyl) = \frac{\frac{\%Acetyl}{M(Acetyl)}}{\frac{\%cellulose\ backbone}{M(AGU)}} \quad DS(Succinoyl) = \frac{\frac{\%Succinoyl}{M(Succinoyl)}}{\frac{\%cellulose\ backbone}{M(AGU)}}$$

$M(MeO) = M(OCH_3) = 31.03\ Da$ $M(HPO) = M(OCH_2CH(OH)CH_3) = 75.09\ Da$ $M(Acetyl) = M(COCH_3) = 43.04\ Da$ $M(Succinoyl) = M(COC_2H_4COOH) = 101.08\ Da$ $M(AGU) = 162.14\ Da$ $M(OH) = 17.008\ Da$ $M(H) = 1.008\ Da$

By convention, the weight percent is an average weight percentage based on the total weight of the cellulose repeat unit, including all substituents. The content of the methoxyl group is reported based on the mass of the methoxyl group (i.e., $-OCH_3$). The content of the hydroxyalkoxyl group is reported based on the mass of the hydroxyalkoxyl group (i.e., O-alkylene-OH); such as hydroxypropoxyl (i.e., $-O-CH_2CH(CH_3)-OH$). The content of the aliphatic monovalent acyl groups is reported based on the mass of $-C(O)-R_1$ wherein $R_1$ is a monovalent aliphatic group, such as acetyl ($-C(O)-CH_3$). The content of the group of formula -C(O)-R-COOH is based on the mass of this group, such as the mass of succinoyl groups (i.e., $-C(O)-CH_2-CH_2-COOH$).

It has been found that the esterified cellulose ether(s) produced according to the process of the present invention has/have a higher weight average molecular weight than expected based on the weight average molecular weight of the cellulose ether used as a starting material. Without wanting to be bound by the theory, it is believed that this higher molecular weight is created by hydrophobic/hydrophilic chain association and/or crosslinking reactions.

According to the above described process esterified cellulose ethers are produced which generally have a weight average molecular weight $M_w$ of from 40,000 to 700,000 Dalton, preferably from 70,000 to 400,000 Dalton, more preferably from 100,000 to 250,000 Dalton. In one embodiment of the invention two or more esterified cellulose ethers are produced which preferably have a difference in $M_w$ of from 10,000 to 200,000 Dalton, more preferably from 20,000 to 100,000 Dalton.

According to the above described process cellulose esterified cellulose ethers are produced which generally have a number average molecular weight $M_n$ of from 10,000 to 250,000 Dalton, preferably from 15,000 to 150,000 Dalton, more preferably from 20,000 to 50,000 Dalton. In one embodiment of the invention two or more cellulose ether-esters are produced which preferably have a difference in $M_n$ of from 3,000 to 80,000 Dalton, more preferably from 5,000 to 50,000 Dalton.

According to the above described process esterified cellulose ethers are produced which generally have a z-average molecular weight, $M_z$, of from 150,000 to 2,500,000 Dalton, preferably from 300,000 to 2,000,000 Dalton, more preferably from 500,000 to 1,800,000 Dalton. In one embodiment of the invention two or more cellulose ether-esters are produced which preferably have a difference in $M_z$ of from 50,000 to 1,000,000 Dalton, more preferably from 50,000 to 600,000 Dalton.

$M_w$, $M_n$ and $M_z$ are measured according to Journal of Pharmaceutical and Biomedical Analysis 56 (2011) 743 using a mixture of 40 parts by volume of acetonitrile and 60 parts by volume of aqueous buffer containing 50 mM $NaH_2PO_4$ and 0.1 M $NaNO_3$ as mobile phase. The mobile phase is adjusted to a pH of 8.0. The measurement of $M_w$, $M_n$ and $M_z$ is described in more details in the Examples.

Some embodiments of the invention will now be described in detail in the following Examples.

EXAMPLES 1 - 6:

Unless otherwise mentioned, all parts and percentages are by weight. In the Examples the following test procedures are used.

Content of ether and ester groups

The content of ether groups in the esterified cellulose ether is determined in the same manner as described for "Hypromellose", United States Pharmacopeia and National Formulary, USP 35, pp 3467-3469.

The ester substitution with acetyl groups ($-CO-CH_3$) and the ester substitution with succinoyl groups ($-CO-CH_2-CH_2-COOH$) are determined according to Hypromellose Acetate Succinate, United States Pharmacopia and National Formulary, NF 29, pp. 1548-1550". Reported values for ester substitution are corrected for volatiles (determined as described in section "loss on drying" in the above HPMCAS monograph).

Determination of $M_w$, $M_n$ and $M_z$

Mw, Mn and Mz are measured according to Journal of Pharmaceutical and Biomedical Analysis 56 (2011) 743 unless stated otherwise. The mobile phase was a mixture of 40 parts by volume of acetonitrile and 60 parts by volume

of aqueous buffer containing 50 mM NaH2PO4 and 0.1 M NaNO3. The mobile phase was adjusted to a pH of 8.0. Solutions of the cellulose ether esters were filtered into a HPLC vial through a syringe filter of 0.45 μm pore size.

More specifically, the utilized Chemicals and solvents were:

Polyethylene oxide standard materials (abbreviated as PEOX 20 K and PEOX 30 K) were purchased from Agilent Technologies, Inc. Palo Alto, CA, catalog number PL2083-1005 and PL2083-2005.

Acetonitrile (HPLC grade ≥ 99.9 %, CHROMASOL plus), catalog number 34998, sodium hydroxide (semiconductor grade, 99.99 %, trace metal base), catalog number 306576, water (HPLC grade, CHROMASOLV Plus) catalog number 34877 and sodium nitrate (99,995 %, trace metal base) catalog number 229938 were purchased from Sigma-Aldrich, Switzerland.

Sodium dihydrogen phosphate (≥ 99.999 % TraceSelect) catalog number 71492.was purchased from FLUKA, Switzerland.

The normalization solution of PEOX20 K at 5 mg/mL, the standard solution of PEOX30 K at 2 mg/mL, and the sample solution of HPMCAS at 2 mg/mL were prepared by adding a weighed amount of polymer into a vial and dissolving it with a measured volume of mobile phase. All solutions were allowed to dissolve at room temperature in the capped vial for 24 h with stirring using a PTFE-coated magnetic stirring bar.

The normalization solution (PEOX 20k, single preparation, N) and the standard solution (PEOX30 K, double preparation, S1 and S2) were filtered into a HPLC vial through a syringe filter of 0.02 μm pore size and 25 mm diameter (Whatman Anatop 25, catalog number 6809-2002), Whatman.

The test sample solution (HPMCAS, prepared in duplicate, T1, T2) and a laboratory standard (HPMCAS, single preparation, LS) were filtered into a HPLC vial through a syringe filter of 0.45 μm pore size (Nylon, e.g. Acrodisc 13 mm VWR catalog number 514-4010).

Chromatographic condition and run sequence were conducted as described by Chen, R. et al.; Journal of Pharmaceutical and Biomedical Analysis 56 (2011) 743- 748). The SEC-MALLS instrument set-up included a HP1100 HPLC system from Agilent Technologies, Inc. Palo Alto, CA; a DAWN Heleos II 18 angle laser light scattering detector and a OPTILAB rex refractive index detector, both from Wyatt Technologies, Inc. Santa Barbara, CA. The analytical size exclusion column (TSK-GEL® GMPWXL, 300 × 7.8 mm) was purchased from Tosoh Bioscience. Both the OPTILAB and the DAWN were operated at 35 °C. The analytical SEC column was operated at room temperature (24 ± 5 °C). The mobile phase was a mixture of 40 volume parts of acetonitrile and 60 volume parts of aqueous buffer containing 50 mM NaH2PO4 and 0.1 M NaNO3 prepared as follows:

Aqueous buffer: 7.20 g of sodium dihydrogen phosphate and 10.2 g of sodium nitrate were added to 1.2 L purified water in a clean 2 L glass bottle under stirring until dissolution.

Mobile phase: 800 mL of acetonitrile were added to 1.2 L of the aqueous buffer prepared above, and stirred until a good mixture was achieved and the temperature equilibrated to ambient temperature.

The mobile phase was pH adjusted to 8.0 with 10M NaOH and filtered through a 0.2 m nylon membrane filter. The flow rate was 0.5 mL/min with in-line degassing. The injection volume was 100 μL and the analysis time was 35 min.

The MALLS data were collected and processed by Wyatt ASTRA software (version 5.3.4.20) using dn/dc value (refractive index increment) of 0.120 mL/g for HPMCAS. The light scattering signals of detector Nos. 1-4, 17, and 18) were not used in the molecular weight calculation. A representative chromatographic run sequence is given below: B, N, LS, S1 (5x), S2, T1 (2x), T2 (2x), T3 (2x), T4 (2x), S2, T5(2x), etc., S2, LS, W, where, B represents blank injection of mobile phase, N1 represents normalization solution; LS represents a laboratory standard HPMCAS; S1 and S2 represent standard solutions one and two, respectively; T1, T2, T3, T4, and T5 represent test sample solutions and W represents water injection. (2x) and (5x) denote the number of injections of the same solution.

Both the OPTILAB and the DAWN were calibrated periodically according to the manufacturer's recommended procedures and frequency. A 100 μL injection of a 5 mg/mL polyethylene oxide standard (PEOX20 K) was employed for normalizing all angle light scattering detectors relative to 90° detector for each run sequence.

Use of this mono-dispersed polymer standard also enabled the volume delay between the OPTILAB and the DAWN to be determined, permitting proper alignment of the light scattering signals to the refractive index signal. This is necessary for the calculation of the weight-averaged molecular weight (Mw) for each data slice.

<u>Production of Hydroxypropyl Methyl Cellulose Acetate Succinate (HPMCAS)</u>

Glacial acetic acid, acetic anhydride, a hydroxypropyl methylcellulose (HPMC), succinic anhydride and sodium acetate (water free) were introduced in the amounts listed in Table 1 below into a reaction vessel under thorough stirring.

The HPMC had a methoxyl and hydroxypropoxyl substitution as listed in Table 2 below and a viscosity of about 3 mPa·s, measured as a 2 % solution in water at 20 °C according to ASTM D2363 - 79 (Reapproved 2006). The weight average molecular weight of the HPMC was about 20,000 Dalton. The HPMC is commercially available from The Dow Chemical Company as Methocel E3 LV Premium cellulose ether.

The mixture was heated at 85° C with agitation for 3 hours to effect esterification. Water was added under

stirring to the reactor to precipitate the HPMCAS. In Examples 1 and 2 the amount of water was 1.8 L. In Examples 3 - 6 the amount of water was 2.1 L. The precipitated product was removed from the reactor and washed with water by applying high shear mixing using an Ultra-Turrax stirrer S50-G45 running at 5200 rpm. In Examples 1 and 2 the amount of water was 16 L, in Examples 3 - 5 the amount of water was 20 L and in Example 6 the amount of water was 16.5 L. The product was isolated by filtration and dried at 50°C overnight.

Table 1

| Example | HPMC* | | Glacial acetic acid | | Succinic anhydride | | Acetic anhydride | | Sodium acetate | | Molecular weight (kDA) | | |
|---|---|---|---|---|---|---|---|---|---|---|---|---|---|
| | g | mol | g | mol/mol HPMC | g | mol/mol HPMC | g | mol/mol HPMC | g | mol/mol HPMC | Mn | Mw | Mz |
| 1 | 195 | 0.97 | 440 | 7.6 | 40.0 | 0.42 | 200 | 2.12 | 120 | 1.52 | 28 | 95 | 703 |
| 2 | 195 | 0.97 | 440 | 7.6 | 40.0 | 0.42 | 200 | 2.12 | 195 | 2.47 | 38 | 144 | 907 |
| 3 | 230 | 1.14 | 521 | 7.6 | 64.4 | 0.57 | 299.0 | 2.69 | 259.5 | 2.78 | 57 | 195 | 1073 |
| 4 | 230 | 1.14 | 521 | 7.6 | 64.4 | 0.57 | 299.0 | 2.69 | 283.1 | 3.04 | 75 | 248 | 1235 |
| 5 | 230 | 1.14 | 521 | 7.6 | 64.4 | 0.57 | 299.0 | 2.69 | 306.7 | 3.29 | 81 | 266 | 1297 |
| 6 | 150 | 0.74 | 340 | 7.6 | 42.0 | 0.57 | 195.0 | 2.69 | 215.4 | 3.54 | 97 | 305 | 1414 |

* calculated on the dried basis

Table 2

| Example | Molecular weight (kDA) | | | Ether Substitution | | Ester substitution | | Ether Substitution | | Ester substitution | |
|---|---|---|---|---|---|---|---|---|---|---|---|
| | Mn | Mw | Mz | Methoxyl (%) | Hydroxypropoxyl (%) | Acetyl (%) | Succinoyl (%) | $DS_M$ | $MS_{HP}$ | $DOS_{Ac}$ | $DOS_s$ |
| 1 | 28 | 95 | 703 | 23.1 | 7.5 | 9.7 | 11.7 | 1.92 | 0.26 | 0.58 | 0.30 |
| 2 | 38 | 144 | 907 | 22.9 | 7.5 | 9.9 | 12.3 | 1.93 | 0.26 | 0.60 | 0.32 |
| 3 | 57 | 195 | 1073 | 22.7 | 7.2 | 10.7 | 12.3 | 1.93 | 0.25 | 0.65 | 0.32 |
| 4 | 75 | 248 | 1235 | 22.6 | 7.2 | 10.9 | 12.4 | 1.93 | 0.25 | 0.67 | 0.32 |
| 5 | 81 | 266 | 1297 | 22.4 | 7.2 | 10.9 | 12.5 | 1.91 | 0.25 | 0.67 | 0.33 |
| 6 | 97 | 305 | 1414 | 22.5 | 7.2 | 10.8 | 12.4 | 1.91 | 0.25 | 0.66 | 0.32 |

$DS_M$= DS(methoxyl): degree of substitution with methoxyl groups
$MS_{HP}$= MS(hydroxypropoxyl): molar substitution with hydroxypropoxyl groups
$DOS_{Ac}$: degree of substitution of acetyl groups
$DOS_s$: degree of substitution of succinoyl groups

The results in Tables 1 and 2 above illustrate that the weight average molecular weight of an ester of a cellulose ether can be varied by varying the molar ratio [alkali metal carboxylate / anhydroglucose units of cellulose ether], even when the cellulose ether used as a starting material and the amount of esterifying agent are kept the same. Also, the measured weight average molecular weight $M_w$ of the produced HPMCAS was higher than could be expected based on the $M_w$ of the HPMC used as a starting material. The $M_w$ of the HPMC was about 20,000 Dalton. Taking the weight gain by the acetyl and succinoyl groups into account, an $M_w$ of about 25,000 Dalton (25 kDa) could be expected.

## Claims

1. A process for preparing two or more esters of a cellulose ether, each having the same ether and ester substituents but different weight average molecular weights comprising the steps of
esterifying a cellulose ether being a hydroxypropyl methylcellulose with succinic anhydride and acetic anhydride in the presence of an alkali metal carboxylate and in the presence of an aliphatic carboxylic acid in two or more separate reactions, wherein
in each reaction a different molar ratio [alkali metal carboxylate / anhydroglucose units of cellulose ether] is used to produce esters of the cellulose ether of different weight average molecular weights, wherein in each reaction the molar ratio [alkali metal carboxylate / anhydroglucose units of cellulose ether] is at least [0.3/ 1.0] different from the molar ratio in the other reaction(s).

2. The process of claim 1 wherein the molar ratio [alkali metal carboxylate / anhydroglucose units of cellulose ether] in each reaction is from [1.5 / 1.0] to [5.0 / 1.0].

3. The process of claim 2 wherein the molar ratio [alkali metal carboxylate / anhydroglucose units of cellulose ether] in each reaction is from [2.7 / 1.0] to [4.5 / 1.0].

4. The process of any one of claims 1 to 3 wherein in each reaction hydroxypropyl methylcellulose is reacted with succinic anhydride and acetic anhydride in the same molar ratios between the succinic anhydride and the cellulose ether and between acetic anhydride and the cellulose ether.

5. A process for preparing an esterified cellulose ether wherein a cellulose ether being a hydroxypropyl methylcellulose is esterified with succinic anhydride and acetic anhydride in the presence of an aliphatic carboxylic acid and in the presence of an alkali metal carboxylate and the molar ratio [alkali metal carboxylate / anhydroglucose units of cellulose ether] is from [2.7 / 1.0] to [4.5 / 1.0].

6. The process of any one of claims 1 to 5 wherein the molar ratio [alkali metal carboxylate / anhydroglucose units of cellulose ether] is from [3.0 / 1.0] to [4.0 / 1.0].

7. The process of any one of claims 1 to 6 wherein the cellulose ether has a viscosity of from 2.4 to 200 mPa·s, measured as a 2 weight-% solution in water at 20 °C according to ASTM D2363 - 79 (Reapproved 2006).

8. The process of any one of claims 1 to 7, wherein the molar ratio [aliphatic carboxylic acid / anhydroglucose units of cellulose ether] is from [4 / 1] to [12 / 1].

9. The process of any one of claims 1 to 8 wherein said one or more produced esterified cellulose ethers have a weight average molecular weight $M_w$ of from 40,000 to 700,000 Dalton.

## Patentansprüche

1. Verfahren zur Herstellung von zwei oder mehr Estern eines Celluloseethers, die jeweils dieselben Ether- und Estersubstituenten, aber unterschiedlich gewichtsmittlere Molekulargewichte aufweisen, umfassend die Schritte:

   Verestern eines Celluloseethers, der Hydroxypropylmethylcellulose ist, mit Bernsteinsäureanhydrid und Essigsäureanhydrid in Gegenwart eines Alkalimetallcarboxylats und in Gegenwart einer aliphatischen Carbonsäure in zwei oder mehr voneinander getrennten Reaktionen, wobei
   in jeder Reaktion ein unterschiedliches molares Verhältnis [Alkalimetallcarboxylat / Anhydroglucoseeinheit des Celluloseethers] verwendet wird, um Ester des Celluloseethers mit unterschiedlichen gewichtsmittleren Molekulargewichten herzustellen, wobei in jeder Reaktion das molare Verhältnis [Alkalimetallcarboxylat / Anhydroglucoseeinheit des Celluloseethers] sich um wenigstens [0,3/1,0] von dem molaren Verhältnis in der anderen Reaktion(en) unterscheidet.

2. Verfahren nach Anspruch 1, wobei das molare Verhältnis [Alkalimetallcarboxylat / Anhydroglucoseeinheit des Celluloseethers] in jeder Reaktion [1,5/1,0] bis [5,0/1,0] beträgt.

3. Verfahren nach Anspruch 2, wobei das molare Verhältnis [Alkalimetallcarboxylat / Anhydroglucoseeinheit des Celluloseethers] in jeder Reaktion [2,7/1,0] bis [4,5/1,0] beträgt.

4. Verfahren nach einem der Ansprüche 1 bis 3, wobei in jeder Reaktion Hydroxypropylmethylcellulose mit Bernsteinsäureanhydrid und Essigsäure im selben molaren Verhältnis von Bernsteinsäureanhydrid zu Celluloseether und Essigsäure zu Celluloseether umgesetzt wird.

5. Verfahren zur Herstellung eines veresterten Celluloseethers, wobei ein Celluloseether, der Hydroxypropylmethylcelluose ist, mit Bernsteinsäureanhydrid und Essigsäureanhydrid in Gegenwart einer aliphatischen Carbonsäure und in Gegenwart eines Alkalimetallcarboxylats verestert wird und das molare Verhältnis [Alkalimetallcarboxylat / Anhydroglucoseeinheit des Celluloseethers] von [2,7/1,0] bis [4,5/1,0] reicht.

6. Verfahren nach einem der Ansprüche 1 bis 5, wobei das molare Verhältnis [Alkalimetallcarboxylat / Anhydroglucoseeinheit des Celluloseethers] von [3,0/1,0] bis [4,0/1,0] reicht.

7. Verfahren nach einem der Ansprüche 1 bis 6, wobei der Celluloseether eine Viskosität von 2,4 bis 200 mPa·s, gemessen als 2 gew.-%ige Lösung in Wasser bei 20°C gemäß ASTM D2363-79 (wiederbestätigt 2006), aufweist.

8. Verfahren nach einem der Ansprüche 1 bis 7, wobei das molare Verhältnis [aliphatische Carbonsäure / Anhydroglucoseeinheit des Celluloseethers] von [4/1] bis [12/1] reicht.

9. Verfahren nach einem der Ansprüche 1 bis 8, wobei dieser eine oder die mehreren hergestellten veresterten Celluloseether ein gewichtsmittleres Molekulargewicht $M_w$ von 40.000 bis 700.000 Dalton aufweisen.

## Revendications

1. Un procédé pour préparer deux esters ou plus d'un éther de cellulose, ayant chacun les mêmes substituants éther et ester mais différentes masses moléculaires moyennes en poids comprenant les étapes consistant à
estérifier un éther de cellulose, à savoir une hydroxypropyl méthylcellulose, avec de l'anhydride succinique et de l'anhydride acétique en présence d'un carboxylate de métal alcalin et en présence d'un acide carboxylique aliphatique dans deux réactions séparées ou plus, où
dans chaque réaction un rapport molaire différent [carboxylate de métal alcalin/unités anhydroglucose d'éther de cellulose] est utilisé afin de produire des esters de l'éther de cellulose de différentes masses moléculaires moyennes en poids, où dans chaque réaction le rapport molaire [carboxylate de métal alcalin/unités anhydroglucose d'éther de cellulose] est différent d'au moins [0,3/1,0] du rapport molaire dans la ou les autres réactions.

2. Le procédé de la revendication 1 où le rapport molaire [carboxylate de métal alcalin/unités anhydroglucose d'éther de cellulose] dans chaque réaction va de [1,5/1,0] à [5,0/1,0].

3. Le procédé de la revendication 2 où le rapport molaire [carboxylate de métal alcalin/unités anhydroglucose d'éther de cellulose] dans chaque réaction va de [2,7/1,0] à [4,5/1,0].

4. Le procédé de n'importe laquelle des revendications 1 à 3 où dans chaque réaction de l'hydroxypropyl méthylcellulose est mise à réagir avec de l'anhydride succinique et de l'anhydride acétique dans les mêmes rapports molaires entre l'anhydride succinique et l'éther de cellulose et entre l'anhydride acétique et l'éther de cellulose.

5. Un procédé pour préparer un éther de cellulose estérifié où un éther de cellulose, à savoir une hydroxypropyl méthylcellulose, est estérifié avec de l'anhydride succinique et de l'anhydride acétique en présence d'un acide carboxylique aliphatique et en présence d'un carboxylate de métal alcalin et le rapport molaire [carboxylate de métal alcalin/unités anhydroglucose d'éther de cellulose] va de [2,7/1,0] à [4,5 /1,0].

6. Le procédé de n'importe laquelle des revendications 1 à 5 où le rapport molaire [carboxylate de métal alcalin/unités anhydroglucose d'éther de cellulose] va de [3,0/1,0] à [4,0/1,0].

7. Le procédé de n'importe laquelle des revendications 1 à 6 où l'éther de cellulose a une viscosité allant de 2,4 à 200 mPa•s, mesurée sous forme de solution à 2 % en poids dans de l'eau à 20 °C selon l'ASTM D2363-79 (Réapprouvée en 2006).

8. Le procédé de n'importe laquelle des revendications 1 à 7, où le rapport molaire [acide carboxylique aliphatique/unités anhydroglucose d'éther de cellulose] va de [4/1] à [12/1].

9. Le procédé de n'importe laquelle des revendications 1 à 8 où lesdits un ou plus d'un éthers de cellulose estérifiés produits ont une masse moléculaire moyenne en poids $M_w$ allant de 40 000 à 700 000 Daltons.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3435027 A
- US 4365060 A
- US 4226981 A
- EP 0219426 A
- WO 2005115330 A
- WO 2011159626 A
- EP 1141029 A
- EP 210917 A
- EP 1423433 A
- US 4316982 A


### Non-patent literature cited in the description


- **EDGAR et al.** *Cellulose,* 2007, vol. 14, 49-64
- **G. BARTELMUS ; R. KETTERER.** *Z. Anal. Chem.,* 1977, vol. 286, 161-190
- Hypromellose Acetate Succinate. *United States Pharmacopia and National Formulary, NF,* vol. 29, 1548-1550
- Hypromellose. *United States Pharmacopeia and National Formulary, USP,* vol. 35, 3467-3469
- *Journal of Pharmaceutical and Biomedical Analysis,* 2011, vol. 56, 743
- *United States Pharmacopia and National Formulary, NF,* vol. 29, 1548-1550
- **CHEN, R. et al.** *Journal of Pharmaceutical and Biomedical Analysis,* 2011, vol. 56, 743-748